# EUROPEAN PATENT SPECIFICATION

(11) **EP 3 918 921 B1**
(45) Date of publication and mention of the grant of the patent: **08.07.2026**
(21) Application number: 19913769.6
(22) Date of filing: 28.11.2019
(51) Int. Cl.: A23B 5/015, A23B 2/50

(54) **STERILIZATION DEVICE AND STERILIZATION METHOD**
STERILISATIONSVORRICHTUNG UND STERILISATIONSVERFAHREN
DISPOSITIF DE STÉRILISATION ET PROCÉDÉ DE STÉRILISATION

(30) Priority: 31.01.2019 JP 2019015305
(43) Date of publication of application: 08.12.2021
(73) Proprietor: Tokyo Metropolitan Industrial Technology Research Institute, Tokyo 135-0064 (JP)
(72) Inventor: KATAOKA, Noriaki, Tokyo 135-0064 (JP); KAWAHARA, Daigo, Tokyo 135-0064 (JP); SEKIGUCHI, Masayuki, Tokyo 135-0064 (JP)
(74) Representative: Locas, Davide
(86) International application number: PCT/JP2019/046674
(87) International publication number: WO 2020/158149

(56) References cited:
- WO-A1-2018/002112
- JP-A- 2000 102 370
- JP-A- 2002 045 159
- JP-A- 2003 098 300
- JP-A- 2005 021 763
- JP-A- 2017 095 108
- JP-A- H10 215 765

## Description

### TECHNICAL FIELD

The present invention relates to a sterilizing device and a sterilizing method, and, more particularly relates to a technique effectively applied to a surface sterilizing process for food having a shell or an outer skin covering an eatable part.

### BACKGROUND ART

In hen's egg, a cuticular layer on a surface of an eggshell is removed by washing, so that micropores (air holes) inside the eggshell are exposed. Because of this, microbes such as salmonella are easy to penetrate the micropores, and there is a risk of contamination of the washed egg surface.

Against such contamination, pharmaceutical sterilization (wet sterilization) is performed. However, in the pharmaceutical sterilization, there is concern about influence of residue of pharmaceuticals. For example, flavor such as smell can be deteriorated by the residue of pharmaceuticals. Also, there is concern about environmental pollution due to effluent.

Therefore, a process making use of ultraviolet ray, that is, a dry unheated process (dry sterilization) is practically applied. And, a process making use of radioactive ray, that is, a dry unheated process (dry sterilization) is studied.

For example, a Non-Patent Document 1 discloses an electron-beam irradiator that generates electron beam by heating a filament inside a vacuum chamber, taking out the electron beam to air through a window foil of an irradiation window in an irradiator unit, and making irradiation of a container with the electron beam. And, the container is delivered while being stored in a container storage unit of a container delivery device, and passes in front of the irradiation window. In this electron-beam irradiator, the irradiation with the electron beam is paused by occurrence of sparks, and a length of the irradiation window in a container delivery direction is made larger than a delivery distance of the container during the pausing time.

A Non-Patent Document 2 discloses a cereal crop rotating/moving device including: a sample tray; a tray table; an oscillator and a shaker that are arranged in series below the tray table; a transfer tool that transfers the oscillation and the shaking generated from the oscillator and the shaker toward the tray table; a power supply switch for use in operating the oscillator and the shaker; operation switches for the oscillator and the shaker; and speed controllers for the oscillation and the shaking. This device can sterilize the cereal crop by making irradiation of a surface of the rotating cereal crop with electron beam of a lower energy.

### RELATED ART DOCUMENTS

### PATENT DOCUMENTS

Patent Document 1: Japanese Patent Application Laid-Open Publication No. 2008-239181
Patent Document 2: Japanese Patent Application Laid-Open Publication No. 1998-215765
Patent Document JP2017095108A relates to a method and apparatus for sterilizing spouted bags and a method and apparatus for aseptic filling of spouted bags.
Patent Document WO2018002112A1 relates to a method and apparatus for treating eggs of poultry with electron beams for sterilization of the calcareous shell.
Patent Document JP2003098300A relates to an electron beam irradiation device.
Patent Document JP2005021763A relates to an electron beam irradiation apparatus.
Patent Document JP2002045159A relates to an electron beam sterilizer suitable for sterilizing granular material.
Patent Document JP2000102370A relates to a method for continuously sterilizing food ingredients and a continuous rotation device used therefor.
Patent Document JPH10215765A relates to a method for sterilizing grains and to a grain rotating device used thereof.

### SUMMARY OF THE INVENTION

### PROBLEMS TO BE SOLVED BY THE INVENTION

As described above, methods of sterilizing foods are roughly classified into the wet sterilization and the dry sterilization. For example, in the case of the sterilization for only the surface of the hen's egg, wet sterilization making use of hypochlorous acid is applied. However, such a sterilizing method has problems of the residue of pharmaceuticals and the effluent as described above.

In the process making use of the ultraviolet ray (dry sterilization), the sterilizing effect is limited to only the surface of the hen's egg, and there is concern of failure to sufficiently sterilize an inside of the egg (such as an inside of the micropore in the eggshell). When dirt is adhered to the surface of the hen's egg, there is concern of failure in the sterilization.

On the other hand, in the process making use of the electron beam (dry sterilization), the sterilization is possible for not only the surface of the hen's egg but also an inside ranging from the eggshell to a certain depth. And, this method is effective since the electron beam can penetrate the dirt of the surface of the hen's egg and make the sterilization.

However, at the time of the irradiation with the electron beam, it is difficult to evenly irradiate the entire surface of the hen's egg with the electron beam, and increase in an irradiation intensity of the electron beam in order to provide the sterilizing effect to the entire surface of the hen's egg increases a radiation dose of bremsstrahlung X ray generated by the irradiation with the electron beam, and adversely increases an internal does of the hen's egg.

A purpose of the present invention is to provide a sterilizing device and a sterilizing method configured to evenly irradiate an entire surface of food having an eggshell or an outer skin covering an eatable part with electron beam to provide the sterilizing effect based on the electron beam to the entire surface. Also, a purpose of the present invention is to provide a sterilizing device and a sterilizing method configured to allow an X-ray irradiation dose on an eatable part of food having an eggshell or an outer skin covering the eatable part to be suppressed to be low so as to satisfy the standards regulated in a law or others by reducing influence of bremsstrahlung X ray on the eatable part due to the irradiation with the electron beam while irradiating an entire surface of the food with electron beam.

### MEANS FOR SOLVING THE PROBLEMS

(1) According to one aspect, the invention relates to a sterilizing device as defined in claim 1. A sterilizing device of the present invention is a sterilizing device that sterilizes only a surface part of food having an eatable part and the surface part such as a shell or an outer skin covering the eatable part by making irradiation with electron beam, and the sterilizing device includes: an electron-beam irradiator unit configured to make irradiation of the food with the electron beam; and a delivery unit that delivers the food while rotating it so that the food passes in a region irradiated with the electron beam from the electron-beam irradiator unit. The electron-beam irradiator unit includes: a chamber; a filament arranged in the chamber; and a window arranged in the chamber, and the irradiation with the electron beam is made when electrons that are released by flow of electric current through the filament are accelerated by an acceleration voltage and pass a foil arranged in the window. The delivery unit includes a plurality of rotatably-supported rollers, the food is delivered while rotating in a rotating direction of the rollers, and, not according to the claimed invention, an angle "θ" that is made by the window and a shaft of the roller in a planar view is "0° < θ ≤ 90°".
(2) According to another aspect, the invention relates to a sterilizing method as defined in claim 7. A sterilizing method of the present invention is a sterilizing method that sterilizes food having an eatable part and a surface part such as a shell or an outer skin covering the eatable part by making irradiation with electron beam, and the food is delivered while rotating and is also irradiated with the electron beam.

### EFFECTS OF THE INVENTION

According to a sterilizing device and a sterilizing method of the present invention, an entire surface of a food having a shell or an outer skin covering an eatable part is evenly irradiated with electron beam, and a sterilizing effect based on the electron beam can be provided to the entire surface. And, influence of bremsstrahlung X ray on the eatable part due to the irradiation with the electron beam is reduced at the same time as the irradiation of the entire surface of the food having the shell or the outer skin covering the eatable part with the electron beam, so that an X-ray irradiation dose on the eatable part can be suppressed to be low so as to satisfy standards defined in a law or others.

### BRIEF DESCRIPTIONS OF THE DRAWINGS

FIG. 1 is a schematic cross-sectional view showing an electron-beam irradiator of a first embodiment, not being part of the claimed invention;
FIG. 2 is a perspective view showing a configuration of a delivery unit for use in the electron-beam irradiator of the first embodiment;
FIG. 3 is a schematic cross-sectional view of the delivery unit;
FIG. 4 is a schematic cross-sectional view of the delivery unit;
FIG. 5 is a diagram schematically showing a sterilizing method of the first embodiment;
FIG. 6 is a top view showing a state of raw egg passing below an irradiation window unit;
FIG. 7 is a diagram showing a configuration of the raw egg;
FIG. 8 is a diagram showing a step of forming an irradiation sample;
FIG. 9 is a diagram showing a relation between a dose and a distance between the irradiation window unit and the irradiation sample;
FIG. 10 is a diagram showing a measurement result of an RCD film dose in a case of a comparative example in which the irradiation sample is not rotated;
FIG. 11 is a diagram showing a measurement result of an RCD film dose in a case in which the irradiation sample is delivered while rotating and in which the irradiation sample passes below the irradiation window unit;
FIG. 12 is a top view showing a state of the raw egg passing below the irradiation window unit;
FIG. 13 is a diagram showing an RCD film dose and a TLD dose in a case in which the irradiation sample is delivered while rotating and in which the irradiation sample is also irradiated with the electron beam from the irradiation window unit;
FIG. 14 is a diagram showing an RCD film dose and a TLD dose in a case in which the irradiation sample is delivered while rotating and in which the irradiation sample is also irradiated with the electron beam from an inclined irradiation window unit;
FIG. 15 is a diagram showing an RCD film dose and a TLD dose in a case in which the irradiation sample is delivered while rotating and in which the irradiation sample is also irradiated with the electron beam from an inclined irradiation window;
FIG. 16 is a top view showing a state of the raw egg passing below an irradiation window unit of a first application example;
FIG. 17 is a top view showing a state of the raw egg passing below an irradiation window unit of a second application example;
FIG. 18 is a diagram showing models of electron beam and a bremsstrahlung X ray to an egg having an SS size; and
FIG. 19 is a diagram schematically showing another sterilizing method.

### BEST MODE FOR CARRYING OUT THE INVENTION

### (First Embodiment, not encompassed by the wording of the claims, but considered as useful for understanding the invention)

Hereinafter, embodiments of the present invention will be explained in detail on the basis of the drawings. In the following explanation, note that a term "A to B" means a term "equal to or larger than A and equal to or smaller than B" (The same goes for a second embodiment and others).

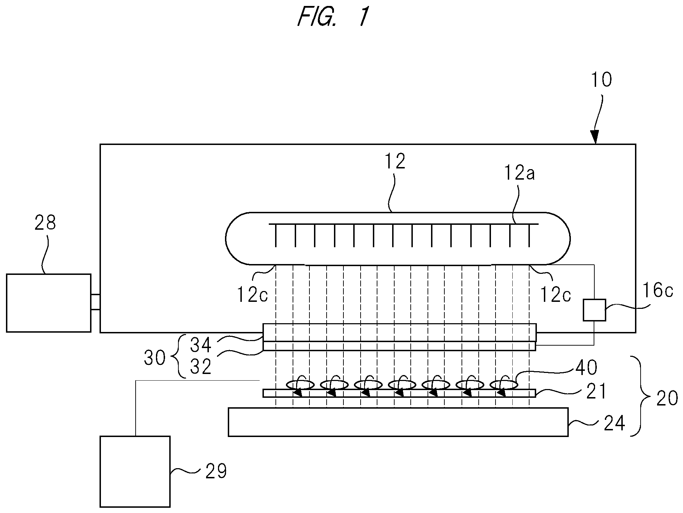

FIG. 1 is a schematic cross-sectional view showing an electron-beam irradiator of the present embodiment.

The electron-beam irradiator (sterilizing device) shown in FIG. 1 includes an electron-beam generator unit 10 and an irradiation chamber 20. A process-target object (irradiation-target object such as a raw egg) 40 arranged in the irradiation chamber 20 is irradiated with the electron beam through an irradiation window unit (irradiation window) 30 arranged in the electron-beam generator unit 10. The process-target object 40 is arranged on a delivery unit 21 such as a conveyor and is delivered. In the present embodiment, the process-target object 40 is delivered while rotating on the delivery unit 21. When the process-target object 40 is delivered while rotating and is also irradiated with the electron beam, its entire surface is evenly irradiated with the electron beam, so that the sterilizing effect based on the electron beam can be provided to the entire surface, and, as a result, the influence of the bremsstrahlung X ray on the eatable part caused by the irradiation with the electron beam can be made small.

The electron-beam generator unit 10 includes a terminal 12 generating the electron beam inside a chamber and a space (acceleration space) where the electron beam that is generated in the terminal 12 is accelerated. And, the space (acceleration space) of the electron-beam generator unit 10 is kept in a vacuum state of about 10⁻³ to 10⁻⁵ Pa by a vacuum exhaust system 28 in order to prevent energy loss due to collision of the electrons with gas molecules and prevent oxidation of a filament 12a. The terminal 12 includes the linear filament 12a releasing thermal electrons and a grid 12c controlling the thermal electrons generated in the filament 12a.

And, the electron-beam generator unit 10 includes a heating power supply (not illustrated) for use in heating the filament 12a to generate the thermal electrons, a controlling direct-current power supply (not illustrated) applying a voltage to a gap between the filament 12a and the grid 12c, and an accelerating direct-current power supply 16c applying a voltage (acceleration voltage) to a gap between the grid 12c and a window foil 32 arranged in the irradiation window unit 30.

The irradiation chamber 20 includes an irradiation space where the process-target object (irradiation-target object) 40 is irradiated with the electron beam. The process-target object 40 is delivered inside the irradiation chamber 20 by a delivery unit 21 such as a conveyor in a direction, for example, from a depth side of a sheet of FIG. 1 toward a front side of the same. A beam collector 24 is arranged inside the irradiation chamber 20. This beam collector 24 absorbs the electron beam penetrating the process-target object 40. Note that the electron-beam generator unit 10 and the irradiation chamber 20 are covered by a lead shielding plate so as to prevent the X ray that is secondarily generated at the time of the irradiation with the electron beam from leaking out.

The inside of the irradiation chamber 20 is under atmosphere of an inert gas, air or others in accordance with a process content. In the case of the sterilizing process (disinfection process), the irradiation atmosphere inside the irradiation chamber 20 is set to be under the air (atmosphere containing oxygen), and the process-target object is sterilized by the electron beam. In this case, ozone is generated from the oxygen by the electron-beam irradiation, and then, is reacted with nitrogen in the air, so that NOx is generated. Since the NOx corrodes a metal foil (window foil 32), the generation of the NOx can be controlled by blowing of dry air from a blower 29 into the irradiation chamber 20.

The irradiation window unit (irradiation window) 30 includes the window foil 32 made of the metal foil and a window frame unit 34 made of copper. The window frame unit 34 is used for supporting the window foil 32. In the window frame unit 34, a rectangular-shaped (quadrangular-shaped) opening is formed. A width of the opening is, for example, about 1 cm, and its longitudinal direction is arranged in a direction that is orthogonal to the deliver direction.

And, inside the irradiation window unit 30, a cooling passage (not illustrated) is formed in order to cool the window foil 32, a temperature of which is increased by the electron-beam irradiation. The window frame unit 34 is detachably attached to the irradiation opening of the electron-beam generator unit 10. The window foil 32 is detachably adhered to a lower surface of the window frame unit 34. As the window foil 32, a metal foil such as an aluminum foil or a titanium (Ti) foil is used.

In the electron-beam irradiator of the present embodiment, the filament 12a is heated through the electric current by the heating power supply, the filament 12a releases the thermal electrons, and the released thermal electrons are attracted everywhere by a control voltage of the controlling direct-current power supply applied between the filament 12a and the grid 12c. Among the thermal electrons, only thermal electrons that pass the grid 12c are effectively extracted as the electron beam. Then, the electron beam that is extracted from the grid 12c is accelerated in the acceleration space by an acceleration voltage of the accelerating direct-current power supply 16c applied between the grid 12c and the window foil 32, and then, penetrates the window foil 32, and the process-target object that is delivered while rotating inside the irradiation chamber 20 below the irradiation window unit 30 is irradiated with the electron beam. Note that an electric current value generated by the flow of the electron beam extracted from the grid 12c is referred to as beam electric current. The larger the beam electric current is, the more the electron beam is.

In the electron-beam irradiator, predetermined values are set to the acceleration voltage, the beam electric current, a delivery speed (irradiation time) of the process-target object, a distance between the electron-beam irradiator unit and the process-target object and others, and then, the electron-beam irradiation process is performed to the process-target object. The energy applied on the electron beam is defined by the acceleration voltage. In other words, the higher the acceleration voltage is, the larger the resultant kinetic energy of the electron beam is. As a result, the electron beam can reach a portion ranging from the surface of the process-target object to the deep position. Therefore, by the change in the setting value of the acceleration voltage, the penetrating depth of the electron beam in the process-target object can be adjusted.

Note that an amount of the energy on the process-target object at the time of the electron-beam irradiation of the process-target object is expressed by a value referred to as absorbed dose (simply referred to as dose in some cases). The absorbed dose on the process-target object is, for example, in proportion to the beam electric current but inverse proportion to the delivery speed of the process-target object. Therefore, the absorbed dose of the electron beam can be adjusted by, for example, change in the irradiation condition such as the beam electric current or the delivery speed of the process-target object. As described above, the beam electric current is the value of the electric current generated by the flow of the electron beam extracted from the grid 12c.

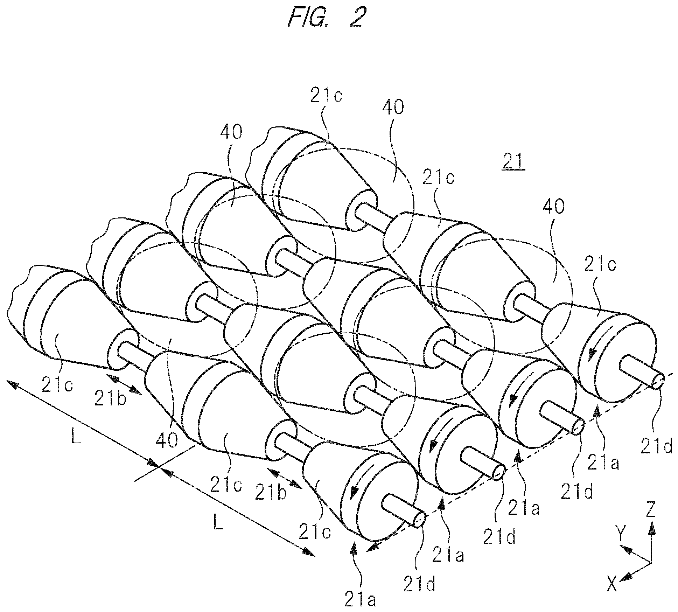

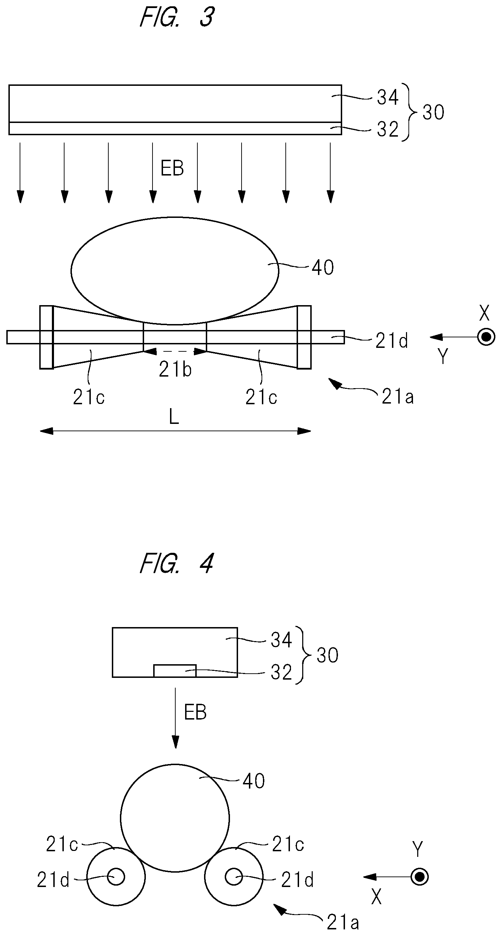

FIG. 2 is a perspective view showing a configuration of the delivery unit for use in the electron-beam irradiator (sterilizing device) of the present embodiment, and FIGs. 3 and 4 are cross-sectional schematic views of the delivery unit in a Y direction and an X direction, respectively.

As shown in FIGs. 2 to 4, the delivery unit 21 has a plurality of rollers 21a extending in the Y direction that is orthogonal to the delivery direction (in this case, the X direction). The roller 21a has a plurality of lanes L. The roller 21a has a shaft 21d and circular truncated cone members 21c arranged on both ends of the shaft 21d at the lane L, and there is a space (gap) 21b between the circular truncated cone members 21c. The circular truncated cone member 21c is arranged so as to be gradually thinner toward the space (gap) 21b.

The process-target object (in this case, the raw egg) 40 is placed at each lane L so as to straddle these circular truncated cone members 21c on both sides of the space (gap) 21b. When the circular truncated cone member 21c rotates about the shaft 21d, the process-target object (in this case, the raw egg) 40 rotates. The shaft 21d of the roller is joined to a chain or a belt (not illustrated) so as to be rotatable. By movement of this chain in the delivery direction (in this case, the X direction, see a dashed arrow), the process-target object (in this case, the raw egg) 40 is delivered in the X direction while rotating.

Therefore, when the electron-beam irradiator as shown in FIG. 1 is used, the sterilizing process can be performed to the surface of the food by the electron-beam irradiation of the food having the shell or the outer skin covering the eatable part, that is the process-target object 40.

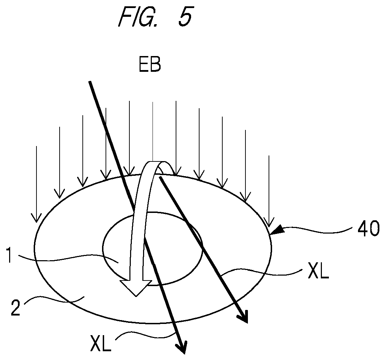

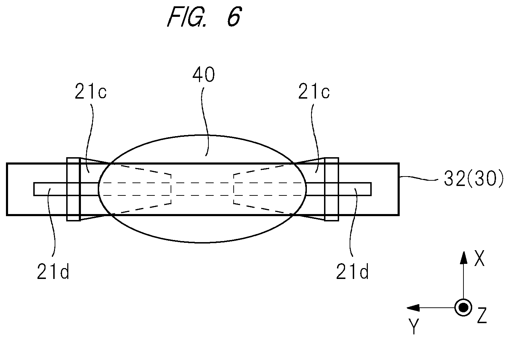

In this case, at the time of the electron-beam irradiation of the process-target object, the X ray is secondarily generated from the process-target object 40, the window foil 32, the window frame unit 34, the delivery unit 21, the lead shielding plate or others. This X ray is also called bremsstrahlung X ray. FIG. 5 is a diagram schematically showing the sterilizing method of the present embodiment. FIG. 6 is a top view showing a state of the raw egg passing below the irradiation window unit (irradiation window).

As shown in FIGs. 5 and 6, while the raw egg (process-target object 40) having yolk 1 and albumen 2 is rotated, its eggshell is irradiated with the electron beam through the irradiation window unit (irradiation window) 30, so that the sterilization (such as the sterilization of the salmonella) can be performed in a range from the surface of the eggshell to a certain depth. In the present embodiment, note that the rectangular-shaped (quadrangular-shaped) opening of the irradiation window unit (irradiation window) 30 extends in the Y direction, and the shaft 21d of the roller also extends in the Y direction (FIG. 6).

Also, when the eggshell is irradiated with the electron beam EB through the irradiation window unit (irradiation window) 30 while the raw egg (process-target object 40) having the yolk 1 and the albumen 2 is rotated, the absorbed dose of the X ray (bremsstrahlung X ray) XL on the eatable part (the yolk 1 and the albumen 2) inside the eggshell can be lowered so as to, for example, meet the standards (such as 0.1 Gy = 100 mGy) regulated in a law or others without locally increasing.

### [Working Example 1]

The sterilizing process for the raw egg, making use of the electron-beam irradiator (sterilizing device) and the sterilizing method of the present embodiment, will be more specifically explained below with reference to working examples.

In order to evaluate the surface and internal absorbed doses, a simulated egg specimen (a simulated raw-egg sample, an irradiation specimen) embedded with an RCD film dosimeter or a TLD element was fabricated, and was irradiated with the electron beam while rotating.

### 1. Shape of Raw Egg

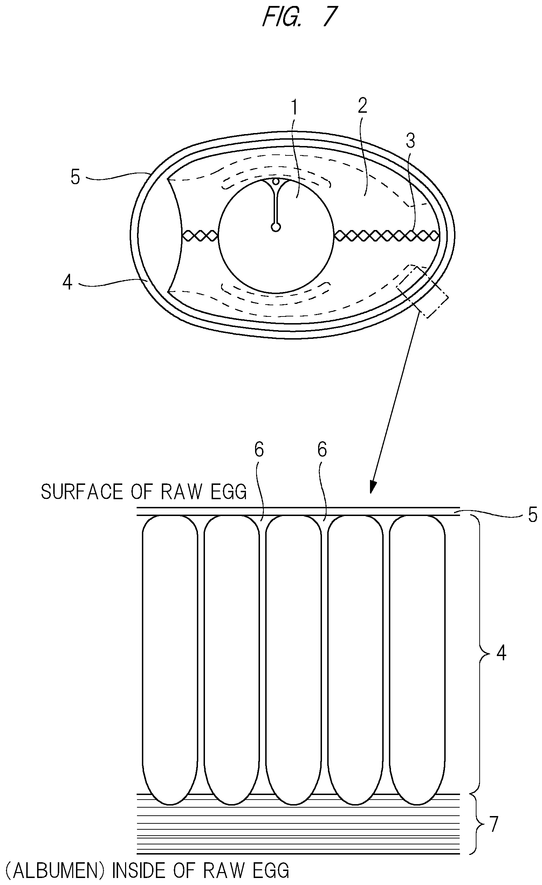

FIG. 7 is a diagram showing the configuration of the raw egg. As shown in FIG. 7, the raw egg has the eggshell 4, and the yolk 1 and the albumen 2 inside the eggshell. The yolk 1 and the albumen 2 are connected to each other by a chalaza 3. There is a cuticular layer 5 outside the eggshell 4, and there is an eggshell membrane 7 inside the eggshell 4. The eggshell 4 has a plurality of pores 6. The cuticular layer 5 can be removed by being washed. A blunt end of the raw egg has an air cell.

### 2. Fabrication of Irradiation Specimen

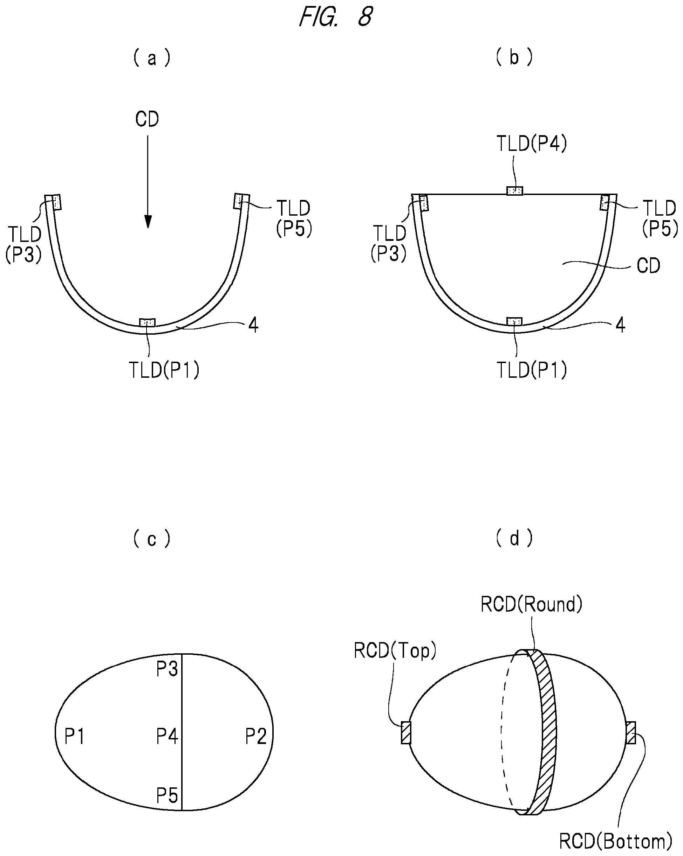

The irradiation specimen (the simulated raw-egg sample, the simulated specimen) was prepared as follows. FIG. 8 is a diagram showing steps of forming the irradiation specimen.

First, the raw egg, a surface of which was washed, (washed egg, M size) was prepared. A blunt-end eggshell and a sharp-end eggshell were obtained by cracking of the raw egg, followed by removal of the inner contents and the eggshell membrane and drying of the egg. The TLD element (TLD100: produced by Thermo Fisher Scientific, Inc.) shielded with a polyethylene film was arranged inside the sharp-end eggshell, and then, an agar "CD" of 2% was injected therein and solidified (FIG. 8(a), (b)). Similarly, the TLD element shielded with a polyethylene film was arranged inside the blunt-end eggshell, and then, an agar CD of 2% was injected therein and solidified (FIG. 8(a), (b)). The sharp-end specimen and the blunt-end specimen were combined with each other to become the irradiation specimen (the simulated raw-egg sample, the simulated specimen). As shown in FIG. 8(c), the TLD element was at a sharp-end portion (P1) of the irradiation specimen (the simulated raw-egg sample, the simulated specimen), a blunt-end portion (P2) of the same, a center portion (P4) of the same, one end (P3) of a body of the same and the other end (P5) of the same. The body is an outer circumference of the raw egg (irradiation specimen) in a minor radius direction.

An agar CD of 2% was injected into the sharp-end eggshell and solidified. Further, an agar CD of 2% was injected into the blunt-end eggshell and solidified. The sharp-end specimen and the blunt-end specimen were combined with each other to become the irradiation specimen (the simulated raw-egg sample, the simulated specimen). An RCD film dosimeter was wounded around the body (Round) of the irradiation specimen, and besides, an RCD film dosimeter was arranged on a blunt-end portion (Bottom) and a sharp-end portion (Top) (FIG. 8(d)).

### 3. Electron-Beam Irradiator

A low-energy electron beam irradiator (produced by IWASAKI ELECTRIC CO., LTD.: Eye Compact EB) was used for the irradiation with the electron beam having the acceleration voltage of 80 kV and the electric current of 0.1 mA. The roller (see FIGs. 3 and 4) was arranged below the irradiation window unit (irradiation window) of the low-energy electron beam irradiator, and the irradiation specimen was rotated and was also irradiated with the electron beam.

### 4. Gap (Distance) between Irradiation Window Unit (Irradiation Window) and Irradiation Specimen

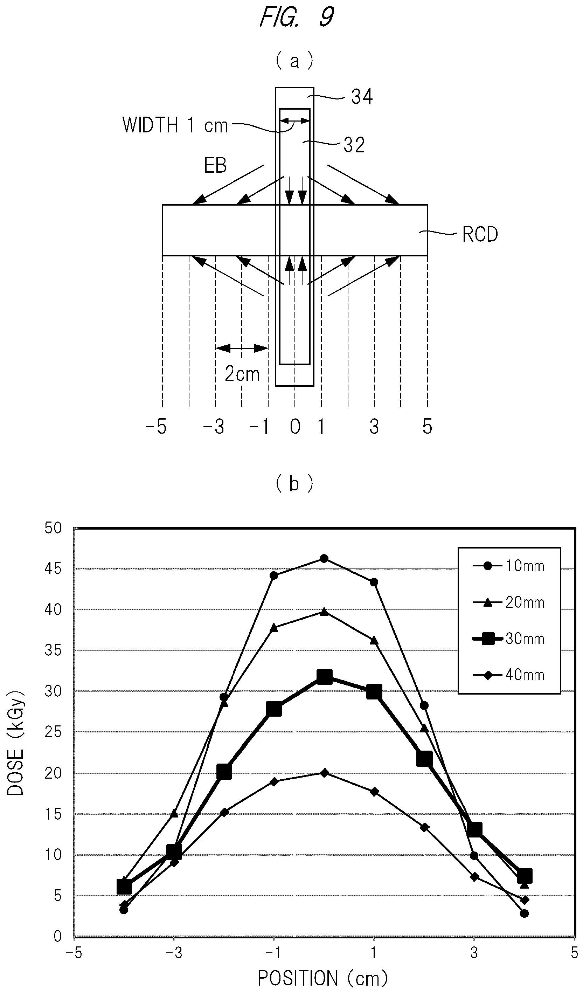

The dose change was studied in accordance with the change in the gap between the irradiation window unit (irradiation window) and the RCD film dosimeter arranged in an irradiation region (stage). FIG. 9 is a diagram showing a relation between the dose and the gap between the irradiation window unit and the irradiation specimen. FIG. 9(a) is a top view showing layouts of the irradiation window unit (irradiation window) and the RCD film dosimeter, and FIG. 9(b) is a graph showing the dose in the irradiation region measured by the RCD film dosimeter. A vertical axis of FIG. 9(b) indicates the dose (kGy), and a horizontal axis of the same indicates a position (cm) of the rectangular RCD film dosimeter.

As shown in FIG. 9(a), the rectangular RCD film dosimeter was arranged in a direction that is orthogonal to an extending direction of the rectangular irradiation window unit (irradiation window). As shown in FIG. 9(b), the larger the gap between the irradiation window unit (irradiation window) and the rectangular RCD film dosimeter is, the smaller a peak of the graph is, and the gentler the graph is. In the present working example, in order to make the dose variation smaller and irradiate the entire process-target object with the electron beam, the gap between the irradiation window unit (irradiation window) and the irradiation specimen was set to 3 cm. The gap between the irradiation window unit (irradiation window) and the irradiation specimen is preferable to be about 2 cm to 4 cm.

As a comparative example, an irradiation specimen not rotating and irradiated with the electron beam was similarly evaluated.

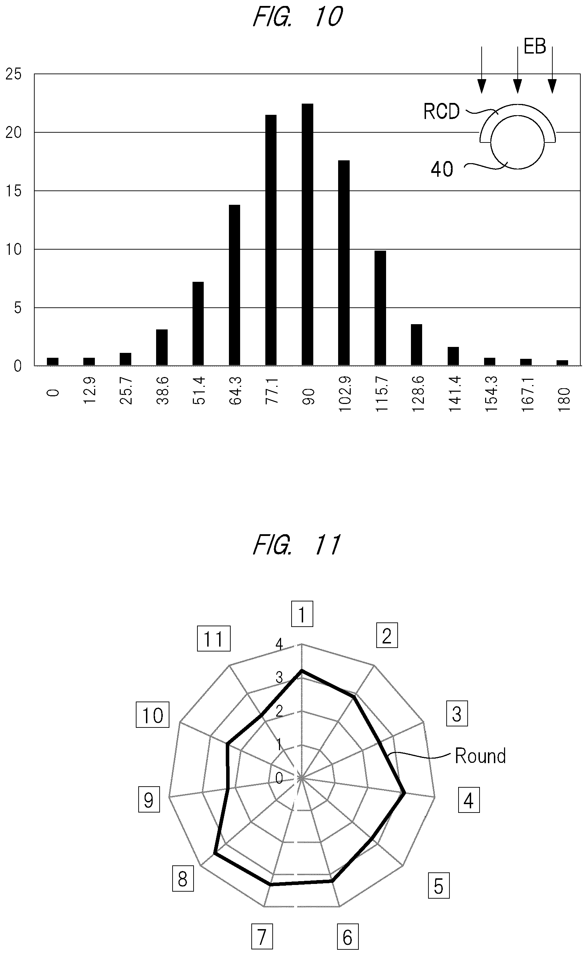

FIG. 10 is a diagram (graph) showing the measurement results of the RCD film dosimeter (surface dose) in the comparative example without the rotation of the irradiation specimen. A horizontal axis indicates an angle [°], and a vertical axis indicates the dose [kGy]. In the comparative example, the RCD film dosimeter was arranged in an upper-half circumference of the body of the irradiation specimen, and the measurement was made (see FIG. 10).

As shown in FIG. 10, it is found that the case without the rotation of the irradiation specimen causes the large variation in the surface dose, and secures the sufficient dose only in the upper portion of the irradiation specimen.

A measurement result of the RCD film dosimeter in the case in which the irradiation specimen was delivered while rotating when passed below the irradiation window unit (irradiation window) is shown in FIG. 11. In FIG. 11, a numerical value surrounded by a square indicates the position of the RCD film dosimeter, and the remaining numerical values 0 to 4 indicate the dose intensity [kGy]. In this working example, the gap between the irradiation window unit and the irradiation specimen was set to 3 cm, the delivery speed was set to 2 m/minutes, and the rotation speed was set to 1.7 rotation/seconds.

As shown in FIG. 11, it is found that the body (Round) was more evenly irradiated with the electron beam than the comparative example. In the case of FIG. 11, the RCD film dose (surface dose) was 3.4 kGy to 2.2 kGy. For example, while the maximum value in the comparative example (FIG. 10) was 47 times the minimum value, the maximum value in the present working example (FIG. 11) was 1.5 times the minimum value.

Note that the irradiation with the electron beam of 1 kGy decreases the amount of the salmonella down to 1/10000, and the irradiation with the electron beam of 3 kGy decreases the amount of the salmonella down to below the detection limit.

By the electron-beam irradiation of the rotating raw egg as described above, the even irradiation of the surface of the raw egg with the electron beam was achieved. The measurement results of the TLD dose (internal dose) in the case with the rotation of the irradiation specimen were P1: 7.4 mGy, P2: 9.0 mGy, P3: 11.3 mGy, P4: 9.0 mGy and P5: 10.6 mGy.

By the rotation of the raw egg as described above, the variations in the surface dose and the internal dose can be suppressed. In this manner, the internal dose can be sufficiently reduced while the surface dose that is sufficient for the sterilization is maintained. For example, these internal doses are sufficiently below 0.1 Gy (= 100 mGy) that is an allowable internal-dose standard value in a test for foods or others, and therefore, the internal dose can be suppressed down to below the standard value while the surface of the raw egg is sterilized.

### (Application Example)

In the working example, the raw egg has been explained as the process-target object 40. However, the process-target object (irradiation-target object) needs to be only a food having an eatable part and a surface part (such as a shell or an outer skin) covering the eatable part, and the sterilizing device and the sterilizing method of the present embodiment can be preferably used for the sterilizing process of such foods.

As such foods, not only the eggs but also fruits, crustaceans and others are exemplified. As the fruits, for example, oranges, lemons, grapefruits, apples, pears, grapes, peaches and others are exemplified. As the crustaceans, shrimps, crabs and others are exemplified. The lemons and the grapefruits have surface asperity (holes) on its surface, and the sterilizing method of the present embodiment is preferably used for these foods.

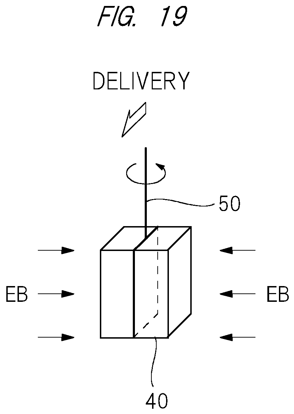

Also, substantially spherical or oval spherical objects or cylindrical objects such as the oranges and the lemons are particularly easy to rotate, and the sterilizing method of the present embodiment is preferably used for these foods. For objects such as the grapes, the shrimps, the crabs and others that are difficult to rotate, the process-target object 40 is delivered while rotating by shaft rotation of a suspending member 50 such as a bar or a rope below which the process-target object 40 is suspended as shown in FIG. 19 and is also irradiated with the electron beam EB from a lateral side, so that the sterilizing process can be performed. FIG. 19 is a diagram schematically showing another sterilizing method.

### (Summary of Process Conditions)

In the present working example, the acceleration voltage was set to 80 kV. However, the acceleration voltage can be adjusted in a range that is, for example, equal to or higher than 80 kV and equal to or lower than 150 kV.

In the present working example, the surface dose was set to about 3 kGy. However, the surface dose can be adjusted in a range that is, for example, equal to or higher than **0.1** kGy and equal to or lower than 10 kGy.

The internal dose is preferably equal to or lower than 0.1 Gy (= 100 mGy) that is the allowable internal-dose standard value in the test for the food or others.

In consideration of the impact on the food, the rotation speed of the food that is the process-target object is preferably 0.3 rotation/seconds to 2.5 rotation/seconds.

In consideration of the sterilizing speed, the delivery speed of the food that is the process-target object is preferably 0.1 m/minutes to 3 m/minutes.

### (Second Embodiment)

In the first embodiment, not being part of the present invention (see, for example, FIG. 6), the rectangular (quadrangular) opening of the irradiation window unit (irradiation window) 30 extends in the Y direction, and the shaft 21d of the roller also extends in the Y direction. In other words, the extending direction (Y direction) of the rectangular (quadrangular) opening of the irradiation window unit (irradiation window) 30 coincides with a direction (Y direction) connecting the blunt-end portion (Bottom) and the sharp-end portion (Top) of the raw egg.

In the present embodiment, the irradiation with the electron beam is inclined with respect to a direction that is orthogonal to the rotating direction of the food in a planar view. That is, the rectangular (quadrangular) opening of the irradiation window unit (irradiation window) 30 is inclined with respect to the extending direction (Y direction) of the shaft 21d of the roller. In other words, the extending direction of the rectangular (quadrangular) opening of the irradiation window unit (irradiation window) 30 and the extending direction (Y direction) of the shaft 21d of the roller cross each other at an angle in a range that is larger than 0° and equal to or smaller than 90°. This range is not encompassed by the wording of the claims.

Note that this case is similar to the first embodiment (see FIG. 1 and others), which is not part of the claimed invention, except that the irradiation window unit (irradiation window) 30 is inclined. Also, regarding the sterilizing method, this case is similar to the first embodiment except that the process-target object (irradiation-target object such as the raw egg) 40 is irradiated with the electron beam EB from the inclined irradiation window unit (irradiation window) 30.

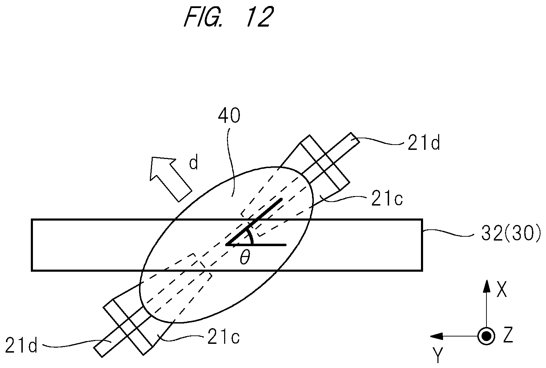

FIG. 12 is a top view showing a state of the raw egg passing below the irradiation window unit (irradiation window). As shown in FIG. 12, the angle that is made by the extending direction of the rectangular (quadrangular) opening of the irradiation window unit (irradiation window) 30 and the extending direction (Y direction) of the shaft 21d of the roller is expressed as "0° < θ ≤ 90°". A term "d" indicates a delivery direction.

As described above, when the rectangular (quadrangular) opening of the irradiation window unit (irradiation window) 30 is inclined with respect to the direction (Y direction) connecting the blunt-end portion (Bottom) and the sharp-end portion (Top) of the raw egg (process-target object 40), the dose of the electron beam on the end portions (the blunt-end portion (Bottom) and the sharp-end portion (Top)) of the raw egg can be increased.

### [Working Example 2]

As similar to the case of the working example 1, the irradiation specimen embedded with the TLD element and the irradiation specimen embedded with the RCD film dosimeter were fabricated (see FIGs. 8(c) and (d)).

The low-energy electron beam irradiator was used for the irradiation with the electron beam having the acceleration voltage of 80 kV and the electric current of 0.1 mA. The roller (see FIGs. 3 and 4) was arranged below the irradiation window unit (irradiation window) of the low-energy electron accelerator, and the rotating irradiation specimen was irradiated with the electron beam.

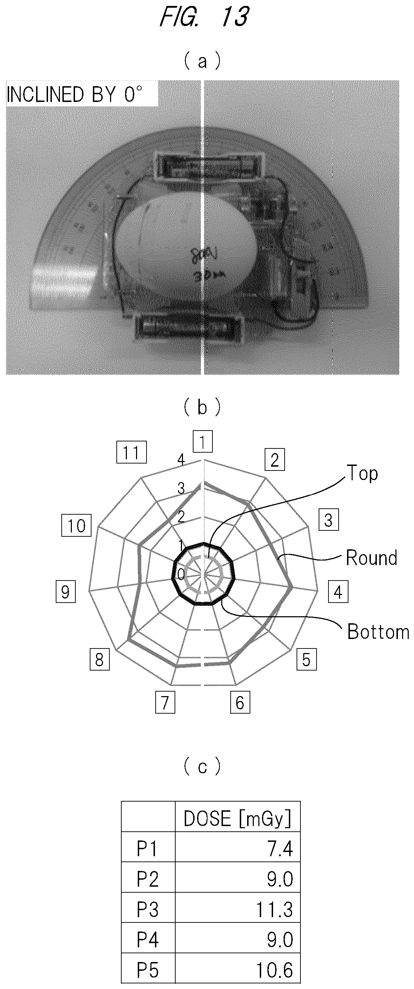

In the present working example, the sterilizing process was performed to the egg under the condition in which 0°, 30° or 60° was set as the angle made by the extending direction of the rectangular (quadrangular) opening of the irradiation window unit (irradiation window) 30 and the extending direction (Y direction) of the shaft 21d of the roller. The case of "0°", not encompassed by the wording of the claims, corresponds to the cases of the first embodiment and the working example 1. In the FIG. 13 described below, each dose of the blunt-end portion (Bottom) and the sharp-end portion (Top) is expressed as an average of two points, the dose of the blunt-end portion (Bottom) is an average of 0.86 kGy and 1.27 kGy, and the dose of the sharp-end portion (Top) is an average of 0.55 kGy and 0.75 kGy.

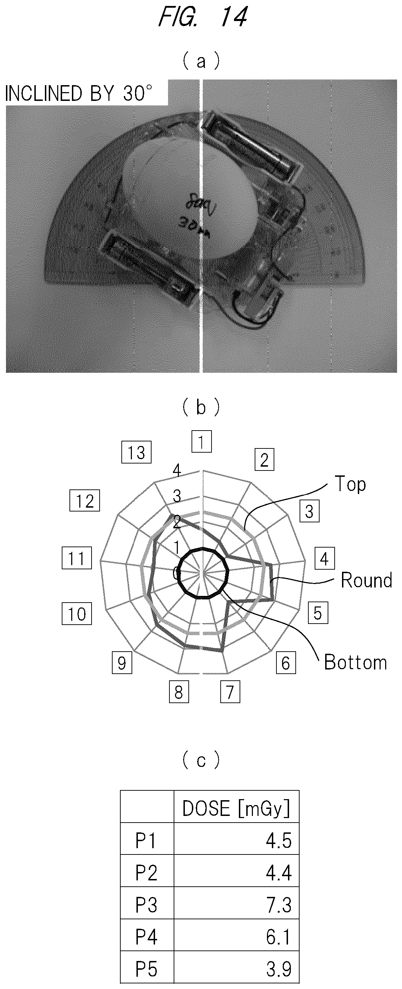

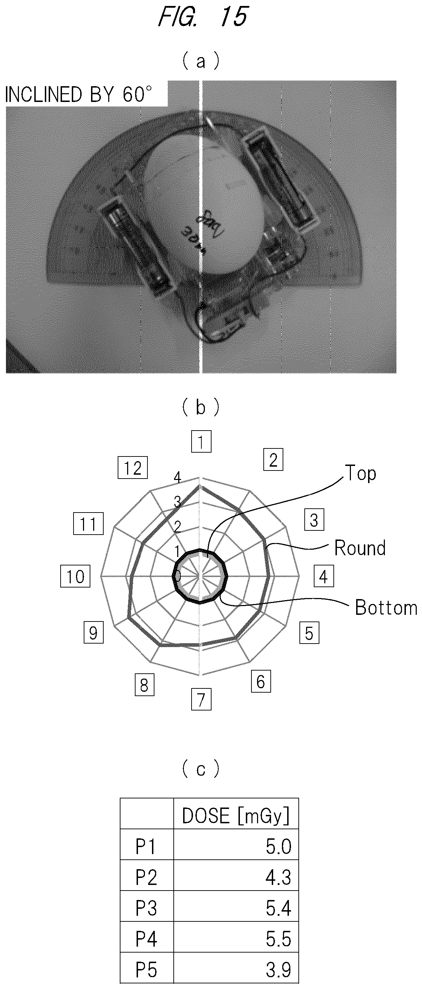

The RCD film dosimeter (surface dose) and the TLD dosimeter (internal dose) in the case of the electron-beam irradiation from the inclined irradiation window unit (irradiation window) to the irradiation specimen that is delivered while rotating are shown in FIGs. 13 to 15. FIG. 13 shows the case of "θ = 0°", FIG. 14 shows the case of "θ = 30°", and FIG. 15 shows the case of "θ = 60°". In these diagrams, (a) is a diagram (picture) showing a state of the inclination, (b) is a graph showing the RCD film dose (surface dose), and (c) is a table showing the TLD dose (internal dose).

From the comparison between FIGs. 13 and 14 and the comparison between FIGs. 13 and 15, it is found that the surface dose on the end portion of the raw egg is improved by the increase in the angle (θ) made by the irradiation window unit (irradiation window) and an axis (in the direction connecting the blunt-end portion (Bottom) and the sharp-end portion (Top)) of the raw egg.

The internal doses in all cases are equal to or lower than 100 mGy, and clear the standards of, for example, 100 mGy.

As described above, by the increase in the angle (θ) made by the irradiation window unit (irradiation window) and the axis (in the direction connecting the blunt-end portion (Bottom) and the sharp-end portion (Top)) of the raw egg, the difference in the surface dose between the body portion and the end portion of the raw egg can be made small, and the irradiation with the electron beam can be made more even.

The angle (θ) made by the irradiation window unit (irradiation window) and the axis (in the direction connecting the blunt-end portion (Bottom) and the sharp-end portion (Top)) of the raw egg is, in an example not encompassed by the wording of the claims, "0° < θ ≤ 90°", is preferably "0° < θ ≤ 60°", and is more preferably nearly 30° so as to be, for example, equal to or larger than 20° and equal to or smaller than 40°. According to the invention, the angle (θ) is "20° ≤ θ ≤ 60°".

### (Application Example 1)

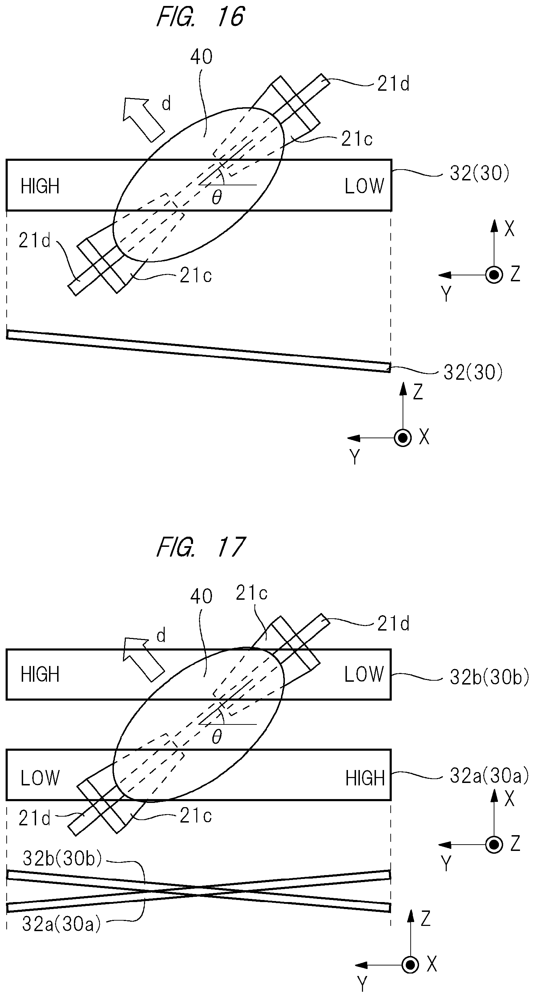

In FIG. 12, the irradiation window unit (irradiation window) 30 is horizontal. However, the irradiation window unit (irradiation window) 30 may be inclined in an up and down direction (Z direction) . For example, as shown in FIG. 16, a left end of the irradiation window unit (irradiation window) in the drawing may be higher than a right end of the irradiation window unit (irradiation window) in the drawing. FIG. 16 is a top view showing a state of the raw egg passing below the irradiation window unit (irradiation window) of the present application example.

### (Application Example 2)

In FIG. 16, the number of the irradiation window unit (irradiation window) 30 is one. However, the irradiation with the electron beam may be made from two irradiation window units (irradiation windows). For example, as shown in FIG. 17, irradiation window units (irradiation windows) 30a and 30b are arranged, and a left end of the irradiation window unit (irradiation window) 30a in the drawing is arranged to be lower than a right end of the irradiation window unit in the drawing while a left end of the irradiation window unit (irradiation window) 30b in the drawing is arranged to be higher than a right end of the irradiation window unit in the drawing. FIG. 17 is a top view showing a state of the raw egg passing below the irradiation window units (irradiation windows) of the present application example. A term "32a" indicates a window foil arranged in an irradiation window unit 30a, and a term "32b" indicates a window foil arranged in an irradiation window unit 30b.

### (Third Embodiment)

In the present embodiment, an electron-beam model and a bremsstrahlung X-ray model making use of Particle and Heavy Ion Transport code System PHITS (Version 3.02) will be explained.

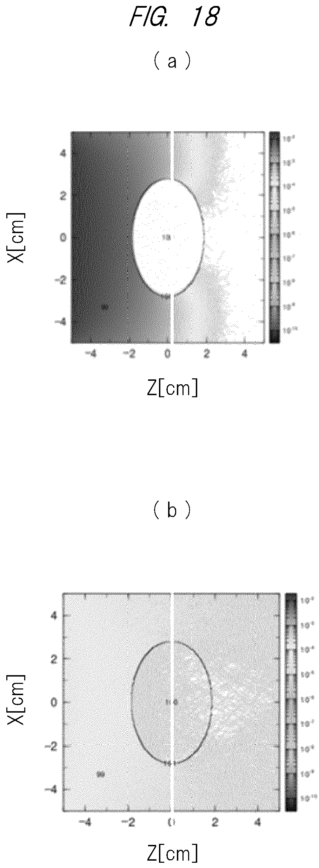

The Particle and Heavy Ion Transport code System PHITS (Version 3.02) was used for creation of the egg models having SS to LL sizes on a weight basis. A density of the eggshell (main component: CaCO₃) was set to 2.0 because of having the pores, a density of the eatable part was set to be equal to that of water, and the atmosphere was set to the standard air, and then, the dose distributions of the electron beam and the bremsstrahlung X ray in the irradiation with the electron beam having the acceleration voltage of 80 keV to the egg were evaluated on a simulation basis. Note that FIG. 18 is a diagram showing the electron-beam model and the bremsstrahlung X-ray model for the egg having the SS size. FIG. 18(a) is the electron-beam model, and FIG. 18(b) is the bremsstrahlung X-ray model.

A table 1 shows a comparison data of the average absorbed dose on the eatable part of the egg having each size. The larger the egg size is, the larger the absorbed dose on the eatable part is. The maximum increase dose was 16%. Therefore, when the eggs having the SS to LL sizes are randomly sterilized, it is preferable to estimate the internal dose to be safer (increase) by about 20%.

**[Table 1]**

| Size | Weight | Eggshell Thickness | Minor Axis | Major Axis | Increase Dose [Compared with SS] |
|---|---|---|---|---|---|
| SS | 40 g | 0.25 mm | 1.886 cm | 2.826 cm | |
| S | 46 g | 0.31 mm | 1.991 cm | 2.931 cm | +4.0% |
| MS | 52 g | 0.35 mm | 2.065 cm | 3.035 cm | +6.8% |
| M | 58 g | 0.39 mm | 2.209 cm | 3.048 cm | +12% |
| L | 64 g | 0.45 mm | 2.285 cm | 3.095 cm | +14% |
| LL | 70 g | 0.51 mm | 2.351 cm | 3.201 cm | +16% |

In the foregoing, the invention made by the present inventors has been concretely described on the basis of the second and third embodiments. However, it is needless to say that the present invention is not limited to the foregoing second and third embodiments, and various alterations can be made within the scope of the present invention, as defined by the appended claims.

### EXPLANATION OF REFERENCE CHARACTERS

- 1: yolk
- 2: albumen
- 3: chalaza
- 4: eggshell
- 5: cuticular layer
- 6: pore
- 7: eggshell membrane
- 10: electron-beam generator unit
- 12: terminal
- 12a: filament
- 12c: grid
- 16c: accelerating direct-current power supply
- 20: irradiation chamber
- 21: delivery unit
- 21a: roller
- 21b: space (gap)
- 21c: circular truncated cone member
- 21d: shaft
- 24: beam collector
- 28: vacuum exhaust system
- 29: blower
- 30: irradiation window unit
- 30a: irradiation window unit
- 30b: irradiation window unit
- 32: window foil
- 34: window frame unit
- 40: process-target object
- 50: suspending member
- CD: agar
- EB: electron beam
- L: lane
- XL: bremsstrahlung X ray

## Claims

1. A sterilizing device sterilizing a food having an eatable part and a surface part covering the eatable part by making irradiation with electron beam, comprising:
an electron-beam irradiator unit (10) configured to make the irradiation of the food with the electron beam; and
a delivery unit (21) configured to rotate and deliver the food so that the food passes in a region irradiated with the electron beam from the electron-beam irradiator unit,
wherein the electron-beam irradiator unit (10) includes:
a chamber;
a filament (12a) arranged in the chamber; and
a window arranged in the chamber, and
the irradiation with the electron beam is made when electrons that are released by flow of electric current through the filament (12a) are accelerated by an acceleration voltage and pass a foil arranged in the window,
the delivery unit (21) includes a plurality of rotatably-supported rollers (21a),
the food is delivered while rotating on the delivery unit (21), and
an angle "θ" that is made by the window and a shaft of the roller (21a) in a planar view is "20° ≤ θ ≤ 60°".

2. The sterilizing device according to claim 1,
wherein a rotation speed of the food is 0.3 rotation/seconds to 2.5 rotation/seconds.

3. The sterilizing device according to claim 1,
wherein a delivery speed of the food is 0.1 m/minutes to 3 m/minutes.

4. The sterilizing device according to claim 1,
wherein a surface dose on the food is equal to or higher than 0.1 kGy and equal to or lower than 10 kGy.

5. The sterilizing device according to claim 4,
wherein an X-ray dose on the eatable part of the food is equal to or lower than 0.1 kGy.

6. The sterilizing device according to claim 1,
wherein the food is a raw egg.

7. A sterilizing method sterilizing a food having an eatable part and a surface part covering the eatable part by making irradiation with electron beam,
wherein the food is rotated and is also irradiated with the electron beam,
wherein, in a device including: a chamber; a filament (12a) arranged in the chamber; and a window arranged in the chamber, the irradiation with the electron beam is made when electrons that are released by flow of electric current through the filament (12a) are accelerated by an acceleration voltage and pass a foil arranged in the window,
by a delivery unit (21) including a plurality of rotatably-supported rollers (21a), and
an angle "θ" that is made by the window and a shaft of the roller (21a) in a planar view is "20° ≤ θ ≤ 60°";
wherein the food is delivered while rotating on the delivery unit (21) .

8. The sterilizing method according to claim 7,
wherein a rotation speed of the food is 0.3 rotation/seconds to 2.5 rotation/seconds.

9. The sterilizing method according to claim 7,
wherein a delivery speed of the food is 0.1 m/minutes to 3 m/minutes.

10. The sterilizing method according to claim 7,
wherein a surface dose on the food is equal to or higher than 0.1 kGy and equal to or lower than 10 kGy.

11. The sterilizing method according to claim 10,
wherein an X-ray dose on the eatable part of the food is equal to or lower than 0.1 kGy.

12. The sterilizing method according to claim 7,
wherein the food is a raw egg.

## Patentansprüche

1. Sterilisationsvorrichtung zum Sterilisieren eines Lebensmittels mit einem essbaren Teil und einem den essbaren Teil bedeckenden Oberflächenteil durch Bestrahlung mit einem Elektronenstrahl, umfassend:
- eine Elektronenstrahl-Bestrahlungseinheit (10), die eingerichtet ist, um die Bestrahlung des Lebensmittels mit dem Elektronenstrahl durchzuführen; und
- eine Zuführeinheit (21), die eingerichtet ist, um das Lebensmittel zu drehen und zuzuführen, sodass das Lebensmittel einen Bereich durchläuft, der mit dem Elektronenstrahl aus der Elektronenstrahl-Bestrahlungseinheit bestrahlt wird,
- wobei die Elektronenstrahl-Bestrahlungseinheit (10) umfasst:
- eine Kammer;
- einen in der Kammer angeordneten Glühfaden (12a); und
- ein in der Kammer angeordnetes Fenster, und
- wobei die Bestrahlung mit dem Elektronenstrahl durchgeführt wird, wenn Elektronen, die durch den Stromfluss durch den Glühfaden (12a) freigesetzt werden, durch eine Beschleunigungsspannung beschleunigt werden und eine im Fenster angeordnete Folie passieren,
- wobei die Fördereinheit (21) eine Mehrzahl von drehbar gelagerten Rollen (21a) umfasst,
- wobei das Lebensmittel während einer Drehung auf der Zuführeinheit (21) zugeführt wird, und
- ein Winkel "θ", der durch das Fenster und einer Welle der Rolle (21a) in einer Draufsicht gebildet wird, "20° ≤ θ ≤ 60°" beträgt.

2. Sterilisationsvorrichtung nach Anspruch 1,
wobei die Drehzahl des Lebensmittels 0,3 Umdrehungen/Sekunde bis 2,5 Umdrehungen/Sekunde beträgt.

3. Sterilisationsvorrichtung nach Anspruch 1,
wobei die Fördergeschwindigkeit des Lebensmittels 0,1 m/Minute bis 3 m/Minute beträgt.

4. Sterilisationsvorrichtung nach Anspruch 1,
wobei eine Oberflächendosis auf dem Lebensmittel gleich oder höher als 0,1 kGy und gleich oder niedriger als 10 kGy ist.

5. Sterilisationsvorrichtung nach Anspruch 4,
wobei eine Röntgendosis auf dem essbaren Teil des Lebensmittels gleich oder niedriger als 0,1 kGy ist.

6. Sterilisationsvorrichtung nach Anspruch 1,
wobei das Lebensmittel ein rohes Ei ist.

7. Sterilisationsverfahren zum Sterilisieren eines Lebensmittels mit einem essbaren Teil und einem den essbaren Teil bedeckenden Oberflächenteil durch Bestrahlung mit einem Elektronenstrahl,
- wobei das Lebensmittel gedreht und ebenfalls mit dem Elektronenstrahl bestrahlt wird,
- wobei in einer Vorrichtung mit einer Kammer; einem in der Kammer angeordneten Glühfaden (12a); und einem in der Kammer angeordnetes Fenster die Bestrahlung mit dem Elektronenstrahl durchgeführt wird, wenn Elektronen, die durch den Stromfluss durch den Glühfaden (12a) freigesetzt werden, durch eine Beschleunigungsspannung beschleunigt werden und eine im Fenster angeordnete Folie passieren,
- wobei eine Fördereinheit (21) eine Mehrzahl von drehbar gelagerten Rollen (21a) umfasst, und
- ein Winkel "θ", der durch das Fenster und einer Welle der Rolle (21a) in einer Draufsicht gebildet wird, "20° ≤ θ ≤ 60°" beträgt;
- wobei das Lebensmittel während einer Drehung auf der Zuführeinheit (21) zugeführt wird.

8. Sterilisationsverfahren nach Anspruch 7,
wobei eine Drehzahl des Lebensmittels 0,3 Umdrehungen/Sekunde bis 2,5 Umdrehungen/Sekunde beträgt.

9. Sterilisationsverfahren nach Anspruch 7,
wobei die Fördergeschwindigkeit des Lebensmittels 0,1 m/Minute bis 3 m/Minute beträgt.

10. Sterilisationsverfahren nach Anspruch 7,
wobei eine Oberflächendosis auf dem Lebensmittel gleich oder höher als 0,1 kGy und gleich oder niedriger als 10 kGy ist.

11. Sterilisationsverfahren nach Anspruch 10,
wobei eine Röntgendosis auf dem essbaren Teil des Lebensmittels gleich oder niedriger als 0,1 kGy ist.

12. Sterilisationsverfahren nach Anspruch 7,
wobei das Lebensmittel ein rohes Ei ist.

## Revendications

1. Dispositif de stérilisation stérilisant un aliment ayant une partie comestible et une partie de surface recouvrant la partie comestible par irradiation avec un faisceau d'électrons, comprenant :
une unité d'irradiation par faisceau d'électrons (10) configurée pour irradier l'aliment avec le faisceau d'électrons ; et
une unité d'acheminement (21) configurée pour faire tourner et acheminer l'aliment de manière à ce qu'il passe dans une zone irradiée par le faisceau d'électrons provenant de l'unité d'irradiation par faisceau d'électrons,
dans lequel l'unité d'irradiation par faisceau d'électrons (10) comprend :
une chambre ;
un filament (12a) disposé dans la chambre ; et
une fenêtre disposée dans la chambre, et
l'irradiation par le faisceau d'électrons est réalisée lorsque les électrons libérés par le passage du courant électrique à travers le filament (12a) sont accélérés par une tension d'accélération et traversent une feuille disposée dans la fenêtre,
l'unité d'acheminement (21) comprend une pluralité de rouleaux (21a) supportés de manière rotative,
l'aliment est acheminé en tournant sur l'unité d'acheminement (21), et
un angle "θ" formé par la fenêtre et un arbre du rouleau (21a) en vue en plan est "20° ≤ θ ≤ 60°".

2. Dispositif de stérilisation selon la revendication 1,
dans lequel la vitesse de rotation de l'aliment est comprise entre 0,3 et 2,5 tours/seconde.

3. Dispositif de stérilisation selon la revendication 1,
dans lequel la vitesse d'acheminement de l'aliment est comprise entre 0,1 m/minute et 3 m/minute.

4. Dispositif de stérilisation selon la revendication 1,
dans lequel une dose de surface sur l'aliment est égale ou supérieure à 0,1 kGy et égale ou inférieure à 10 kGy.

5. Dispositif de stérilisation selon la revendication 4,
dans lequel une dose de rayons X sur la partie comestible de l'aliment est égale ou inférieure à 0,1 kGy.

6. Dispositif de stérilisation selon la revendication 1, dans lequel l'aliment est un œuf cru.

7. Procédé de stérilisation d'un aliment ayant une partie comestible et une partie de surface recouvrant la partie comestible, par irradiation avec un faisceau d'électrons,
dans lequel l'aliment est tourné et est également irradié par le faisceau d'électrons,
dans lequel, dans un dispositif comprenant : une chambre ; un filament (12a) disposé dans la chambre ; et une fenêtre disposée dans la chambre, l'irradiation par le faisceau d'électrons est effectuée lorsque les électrons libérés par le flux de courant électrique à travers le filament (12a) sont accélérés par une tension d'accélération et traversent une feuille disposée dans la fenêtre,
par une unité d'acheminement (21) comprenant une pluralité de rouleaux (21a) supportés de manière rotative, et
un angle "θ" formé par la fenêtre et un arbre du rouleau (21a) en vue en plan est "20° ≤ θ ≤ 60°" ;
dans lequel l'aliment est acheminé en tournant sur l'unité d'acheminement (21).

8. Procédé de stérilisation selon la revendication 7,
dans lequel la vitesse de rotation de l'aliment est comprise entre 0,3 et 2,5 tours/seconde.

9. Procédé de stérilisation selon la revendication 7,
dans lequel la vitesse d'acheminement de l'aliment est comprise entre 0,1 m/minute et 3 m/minute.

10. Procédé de stérilisation selon la revendication 7,
dans lequel une dose de surface sur l'aliment est égale ou supérieure à 0,1 kGy et égale ou inférieure à 10 kGy.

11. Procédé de stérilisation selon la revendication 10,
dans lequel une dose de rayons X sur la partie comestible de l'aliment est égale ou inférieure à 0,1 kGy.

12. Procédé de stérilisation selon la revendication 7,
dans lequel l'aliment est un œuf cru.
